Europäisches Patentamt

European Patent Office

Office européen des brevets

(11) Numéro de publication : **0 093 669 B1**

# (12) FASCICULE DE BREVET EUROPÉEN

(45) Date de publication du fascicule du brevet :
30.12.86

(51) Int. Cl.⁴ : **F 16 F 3/10, B 60 G 17/00**

(21) Numéro de dépôt : **83400864.1**

(22) Date de dépôt : **29.04.83**

(54) **Ressort à amortissement.**

(30) Priorité : **29.04.82 FR 8207383**
**20.07.82 FR 8212615**

(43) Date de publication de la demande :
**09.11.83 Bulletin 83/45**

(45) Mention de la délivrance du brevet :
**30.12.86 Bulletin 86/52**

(84) Etats contractants désignés :
**BE DE FR GB IT LU NL SE**

(56) Documents cités :
**DE-A- 2 509 934**
**DE-C- 616 971**
**FR-A- 1 046 237**
**FR-A- 1 091 672**
**FR-A- 1 449 011**
**FR-A- 2 050 575**
**GB-A- 497 008**
**GB-A- 497 051**
**GB-A- 690 340**
**US-A- 2 673 084**
**US-A- 2 801 841**
**US-A- 2 807 459**
**US-A- 3 806 150**

(73) Titulaire : **SOCIETE M T E Société anonyme**
**32, Quai de Dion Bouton**
**F-92800 Puteaux (FR)**

(72) Inventeur : **Nast, Jean-Daniel**
**Vallée du Mesvrin St Symphorien de Marmagne**
**F-71710 Montcenis (FR)**
Inventeur : **Moinard, Jean**
**20, avenue Lyautey**
**F-91710 Vert-le-Petit (FR)**

(74) Mandataire : **Lejet, Christian**
**Société JEUMONT-SCHNEIDER 31-32, Quai de Dion Bouton**
**F-92811 Puteaux Cedex (FR)**

Jouve, 18, rue St-Denis, 75001 Paris, France

## Description

La présente invention se rapporte à un ressort à amortissement permettant de réduire les vibrations.

Ce ressort est destiné à être utilisé dans le domaine de la construction ferroviaire ou de la construction d'automobiles ou de camions ou de la construction électro-mécanique ou électronique.

Dans certaines applications, les ressorts sont soumis à des phénomènes vibratoires et des résonances indésirables apparaissent à certaines fréquences. On définit alors la surtension comme le rapport de l'amplitude à la résonance par rapport à l'amplitude à la fréquence d'excitation pratiquement nulle (amplitude statique).

On connaît par le brevet FR-A-1 449 011, un ressort de suspension comprenant deux lames, entre lesquelles est inséré un amortisseur. Cet amortisseur comporte une substance telle qu'un élastomère fixé entre deux plaques, par exemple par adhérisation, ces plaques étant solidaires des deux 15 lames. Mais ce dispositif n'est pas directement applicable aux ressorts hélicoïdaux.

On a déjà envisagé, par exemple dans le brevet FR-A-1 046 237, d'amortir les oscillations ou vibrations d'un ressort à boudin en interposant, entre les spires voisines, des éléments élastiques, par exemple de petits tampons. Ces éléments élastiques, réalisés en caoutchouc, sont simplement appliqués contre les spires et l'amortissement n'intervient que si le ressort est soumis à des oscillations de grande amplitude.

Le brevet GB-A-497 051 décrit un ressort hélicoïdal dont au moins une partie des spires sont reliées par l'intermédiaire d'une spirale en caoutchouc, cette spirale en caoutchouc adhérant aux spires, de manière à en être inséparables. Ce dispositif a pour but d'augmenter la raideur du ressort pour éviter l'emploi d'un amortisseur supplémentaire.

Le but de l'invention est différent, il s'agit de modifier un ressort de façon à limiter les phénomènes de résonances qui apparaissent sur un ressort métallique à certaines fréquences, et ceci sans faire varier sensiblement les raideurs du ressort, quelles que soient les charges et donc quel que soit le pas des spires. En basse fréquence, la conception adoptée introduit une augmentation très légère de la raideur axiale mais une variation quasiment nulle de la raideur radiale. Le ressort selon l'invention est efficace pour amortir la première fréquence de résonance ainsi que ses harmoniques. Il est particulièrement adapté pour être utilisé dans un ressort multiple (formé de deux ressorts ou plus, emboîtés les uns dans les autres et ayant le même axe d'enroulement).

La présente invention décrit donc un ressort à amortissement constitué par un ressort en hélice et par des plots élastiques insérés chacun entre deux spires de fil voisines. Il est essentiellement caractérisé par le fait que les faces de contact des plots avec les spires adhèrent au fil de manière à en être inséparables, et que les plots sont dimensionnés et réalisés en un matériau viscoélastique, de telle façon que les raideurs du ressort à amortissement soient sensiblement égales à celles du ressort à hélice, les plots servant uniquement à amortir les oscillations de grande amplitude à la fréquence de résonance du ressort à hélice.

L'invention va maintenant être décrite avec plus de détails en se référant à des modes de réalisation donnés à titre d'exemples et représentés par les dessins annexés.

La figure 1 représente un ressort à amortissement selon l'invention.

La figure 2 représente un autre ressort selon l'invention.

La figure 3 représente le détail d'un plot d'amortissement monté sur le ressort de la figure 1 ou 2.

La figure 4 représente une variante d'un plot d'amortissement.

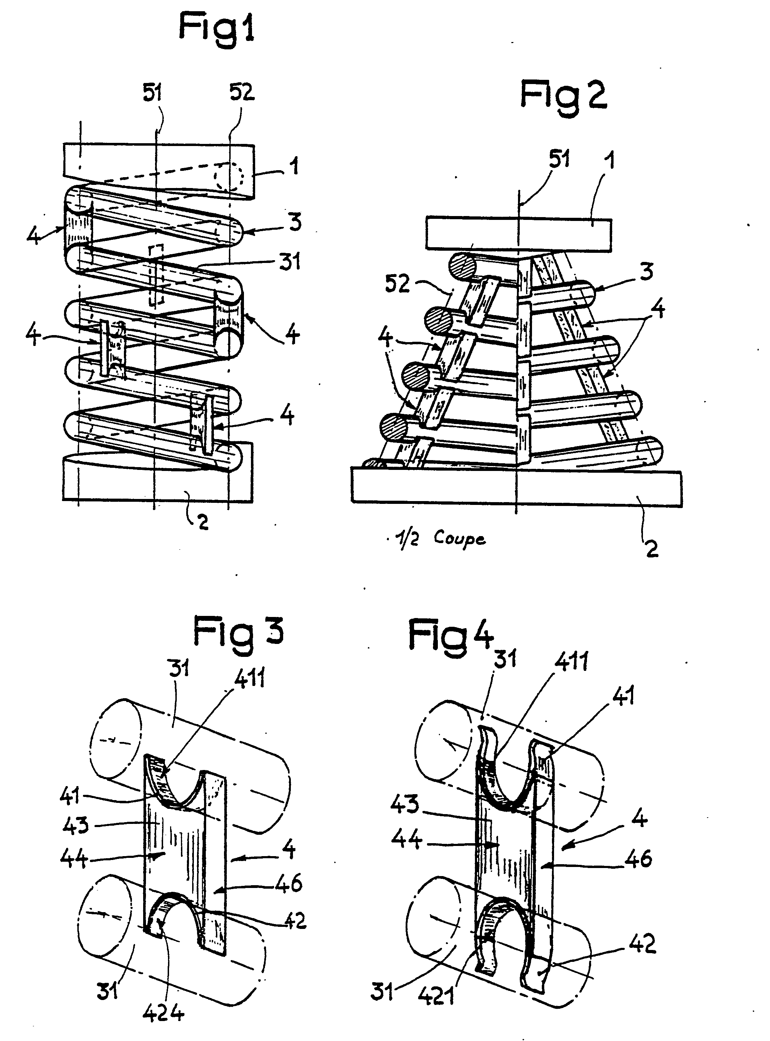

En se référant aux dessins, le ressort à amortissement comprend un ressort en hélice 3 dont les spires terminales s'appuient sur deux semelles 1 et 2. Ce ressort est réalisé par enroulement, autour d'un axe d'enroulement 51 d'un fil 31 en métal ou en un autre matériau de section ronde, carrée, rectangulaire ou autres. La surface directrice ou surface d'enroulement de la fibre neutre (surface de révolution autour de l'axe 51 ayant pour génératrice la ligne joignant les centres de gravité des sections de fil dans un plan passant par 51) est cylindrique comme sur la figure 1 ou conique comme sur la figure 2 ou parabolique. La surface du fil métallique peut être protégée par un revêtement.

L'amortissement est réalisé par une pluralité de plots d'amortissement 4 qui sont insérés chacun dans un intervalle hélicoïdal compris entre deux spires voisines, au moins un plot étant prévu par intervalle entre deux spires. Chaque plot est adhérisé à deux armatures métalliques 41 et 42 formant, vers l'extérieur, deux faces d'adhésion concaves opposées 411 et 421 qui épousent la forme des surfaces convexes de deux spires voisines, ces armatures étant fixées auxdites spires, par collage, sur deux surfaces d'adhérence centrées sur une même génératrice. Généralement ces faces d'adhésion ont une forme sensiblement cylindrique correspondant au fil cylindrique du ressort.

Chaque plot d'amortissement pourrait être réalisé sans armatures et être directement adhérisé par vulcanisation au fil du ressort.

En l'absence de contrainte dans l'élément élastique, l'épaisseur élastique 43 a, entre les faces d'adhésion opposées 411 et 421, une forme générale de prisme ayant une section droite carrée ou rectangulaire. Cette surface prismatique est délimitée par deux faces 44 sensiblement parallèles entre elles et sensiblement perpendiculaires à l'axe du fil situé à leur niveau et par deux faces 46 sensiblement parallèles entre elles et à l'axe du fil. L'épaisseur entre les faces 44 est relativement faible de manière que chaque plot n'occupe qu'une faible partie d'une spire. La partie élastique du plot pourrait avoir un profil différent.

Sur la figure 1, les plots d'amortissement 4 sont disposés à intervalles réguliers par exemple de manière que deux plots successifs soient séparés par une distance (mesurée le long de l'hélice) supérieure à une spire.

Les plots d'amortissement peuvent être disposés de manière à former des barreaux s'étendant sur au moins deux intervalles entre spires adjacents. Ainsi sur la figure 2, les plots sont alignés selon des génératrices de manière à former au moins trois barreaux s'étendant sur toute la hauteur du ressort.

Dans le mode de réalisation de la figure 4, les armatures 41 et 42 forment des étriers qui enveloppent chacun le fil sur plus d'une demi-circonférence. Ces étriers sont fixés au fil par collage ou par tout autre système mécanique (boulonnage).

L'adhérence des plots d'amortissement sur le fil du ressort est effectuée par compression du ressort 3 sur les armatures métalliques du plot. L'adhérence est réalisée par collage ou par tout autre moyen de fixation. Le dimensionnement des plots d'amortissement est réalisé de manière que sous la charge statique nominale aucune contrainte n'est transmise à ceux-ci. De ce fait les plots d'amortissement sont uniquement utilisés lors des vibrations du ressort.

Le matériau viscoélastique constituant la partie élastique du plot est un matériau à base d'élastomère, de caoutchouc et de charge bien connu de l'homme du métier. Ce matériau présente une dureté Shore A supérieure à 18.

Il est bien entendu que l'on peut sans sortir du cadre de l'invention imaginer des variantes et des perfectionnements de détails et de même envisager l'emploi de moyens équivalents. Le ressort pourrait être de forme rectangulaire.

## Revendications

1. Ressort à amortissement constitué par un ressort en hélice (3) et par des plots élastiques (4) insérés chacun entre deux spires de fil voisines, caractérisé en ce que les faces de contact (411, 421) desdits plots (4) avec les spires adhèrent au fil de manière à en être inséparables, et en ce que lesdits plots (4) sont dimensionnés et réalisés en un matériau viscoélastique, de telle façon que les raideurs du ressort à amortissement soient sensiblement égales à celles du ressort à hélice (3), lesdits plots (4) servant uniquement à amortir les oscillations de grande amplitude à la fréquence de résonance du ressort à hélice (3).

2. Ressort selon la revendication 1, caractérisé en ce que chaque plot est constitué par un matériau viscoélastique et adhérant à deux armatures métalliques (41, 42) formant les deux faces de contact opposées (411, 421) qui épousent la forme des surfaces de deux spires voisines.

## Claims

1. Damper spring consisting of a helical spring (3) and of resilient elements (4) each of which is inserted between two adjacent turns of wire, characterized in that the faces (411, 421) of the said elements (4) in contact with the turns adhere to the wire so as to be inseparable therefrom and in that the said elements (4) are sized and made of a viscoelastic material so that the stiffnesses of the damper spring are substantially equal to those of the helical spring (3), the said elements (4) being used solely to damp high-amplitude oscillations at the resonance frequency of the helical spring (3).

2. Spring according to Claim 1, characterized in that each element consists of a viscoelastic material adhering to two metal clamps (41, 42) forming the two opposed contact faces (411, 421) which fit the shape of the surfaces of two adjacent turns.

## Patentansprüche

1. Dämpfungsfeder, die durch eine Schraubenfeder (3) und durch elastische Klötzchen (4) gebildet ist, welche jeweils zwischen zwei benachbarte Drahtwindungen eingefügt sind, dadurch gekennzeichnet, daß die Kontaktflächen (411, 421) der genannten Klötzchen (4) an den Windungen am Draht derart anhaften, daß sie von ihm untrennbar sind, und daß die genannten Klötzchen (4) derart dimensioniert und aus einem viskoelastischen Material gebildet sind, daß die Steifigkeiten der Dämpfungsfeder im wesentlichen gleich denen sind, welche die Schraubenfeder (3) aufweist, wobei die genannten Klötzchen (4) lediglich zur Dämpfung der mit großer Amplitude bei der Resonanzfrequenz der Schraubenfeder (3) auftretenden Schwingungen dienen.

2. Feder nach Anspruch 1, dadurch gekennzeichnet, daß jedes Klötzchen aus einem viskoelastischen Material gebildet ist, das an zwei metallischen Bewehrungen (41, 42) anhaftet, welche die zwei gegenüberliegenden Kontaktflächen (411, 421) bilden, die an die Oberflächenform der zwei benachbarten Windungen angeschmiegt sind.

0 093 669

Fig 1

Fig 2

1/2 Coupe

Fig 3

Fig 4